# EUROPÄISCHE PATENTSCHRIFT

(11) **EP 2 527 611 B1**
(45) Veröffentlichungstag und Bekanntmachung des Hinweises auf die Patenterteilung: **09.11.2016**
(21) Anmeldenummer: 12166018.7
(22) Anmeldetag: 27.04.2012
(51) Int. Cl.: F01N 3/28, F01N 3/20, F01N 13/08, F01N 13/10, F02B 25/00, F01N 13/00, F02B 25/02, F02B 37/00, F01N 13/04

(54) **Vorrichtung und Verfahren zur Abgasnachbehandlung**
Device and method for treating waste gas
Dispositif et procédé destinés au traitement de gaz d'échappement

(30) Priorität: 26.05.2011 EP 11167755
(43) Veröffentlichungstag der Anmeldung: 28.11.2012
(73) Patentinhaber: Wärtsilä Schweiz AG, 8401 Winterthur (CH)
(72) Erfinder: Schulz, Reiner Dr., 8303 Bassersdorf (CH)
(74) Vertreter: Intellectual Property Services GmbH

(56) Entgegenhaltungen:
- WO-A1-93/18285
- DE-A1- 10 308 618
- FR-A1- 2 396 164
- JP-A- 57 186 051
- US-A- 3 935 705
- US-A- 3 972 184

## Beschreibung

Die Erfindung betrifft eine Vorrichtung zur Abgasnachbehandlung für einen Grossdieselmotor, insbesondere einen Zweitakt-Grossdieselmotor, gemäss Oberbegriff von Anspruch 1, einen Grossdieselmotor, insbesondere einen Zweitakt-Grossdieselmotor, mit mindestens einer derartigen Vorrichtung zur Abgasnachbehandlung und ein Verfahren gemäss Oberbegriff von Anspruch 13 zur Abgasnachbehandlung in einem Grossdieselmotor.

In Grossdieselmotoren und insbesondere Zweitakt-Grossdieselmotoren, wie sie beispielsweise in Schiffen und Kraftwerken zum Einsatz kommen, werden in zunehmendem Masse Katalysatoren eingesetzt, um den Schadstoffausstoss in den Abgasen herabzusetzen und die strenger werdenden Umweltschutzauflagen zu erfüllen. Zur Verminderung des Stickoxidgehalts wird hauptsächlich die sogenannte selektive katalytische Reduktion (SCR) eingesetzt, wobei den Abgasen zur Aufrechterhaltung der katalytischen Reduktion Ammoniak oder Ammoniak erzeugende Substanzen zugemischt werden.

Herkömmliche Vorrichtungen zur Abgasnachbehandlung mittels selektiver katalytischer Reduktion haben den Nachteil, dass sie vergleichsweise viel Platz benötigen, wenn Standardbauteile für die Rohre und Verbindungen eingesetzt werden. Damit erhöht sich der für den Grossdieselmotor benötigte Raumbedarf, was die Kundenakzeptanz verschlechtert. Wird andererseits einseitig auf eine platzsparende Ausführung geachtet, besteht die Gefahr, dass die Reduktionswirkung des Katalysators ungenügend ist.

Aus Dokument EP 0 468 919 A1 ist ein Grossdieselmotor bekannt, in welchem der Katalysator im Auspuffsammelrohr angeordnet ist. Diese Anordnung des Katalysators ist vergleichsweise kompakt, doch hat das Auspuffsammelrohr im Vergleich mit Auspuffsammelrohren ohne Katalysator einen grösseren Durchmesser, der sich nur schlecht in den vorhandenen Platz zwischen den Zylindern und dem Turbolader integrieren lässt, so dass der zusätzliche Platzbedarf immer noch störend ist.

Aufgabe der Erfindung ist es, eine Vorrichtung und ein Verfahren zur Abgasnachbehandlung für einen Grossdieselmotor, insbesondere einen Zweitakt-Grossdieselmotor zur Verfügung zu stellen, sowie einen Grossdieselmotor, insbesondere einen Zweitakt-Grossdieselmotor mit einer derartigen Vorrichtung zur Abgasnachbehandlung, wobei die Vorrichtung so ausgelegt ist, dass sie sich in den vorhandenen Platz neben den Zylindern des Grossdieselmotors einfügen lässt, ohne dass dadurch die Gesamthöhe oder Gesamtbreite des Grossdieselmotors im Vergleich zu einem Grossdieselmotor derselben Bauart und Baugrösse ohne Abgasnachbehandlung vergrössert wird, und ohne dass die Auslegung des Grossdieselmotors gross geändert werden muss.

Diese Aufgabe wird erfindungsgemäss durch die in Anspruch 1 definierte Vorrichtung, den in Anspruch 11 definierten Grossdieselmotor und das in Anspruch 13 definierte Verfahren gelöst.

Die erfindungsgemässe Vorrichtung zur Abgasnachbehandlung für einen Grossdieselmotor, insbesondere einen Zweitakt-Grossdieselmotor, umfasst einen länglichen Abgassammler mit mehreren, über dessen Längsrichtung verteilten Einlässen zur Aufnahme der Abgase des Grossdieselmotors und einen länglichen, mit dem Abgassammler verbundenen Katalysatorbehälter, in dem mehrere Katalysatorelemente angeordnet sind, und der einen oder mehrere Auslässe hat, wie offenbart in US3935705.

Die Vorrichtung zeichnet sich dadurch aus, dass der Abgassammler und der Katalysatorbehälter im Wesentlichen parallel nebeneinander angeordnet und durch mindestens eine, jeweils in Längsrichtung verlaufende Trennwand voneinander abgegrenzt sind, dass der Abgassammler über einen oder mehrere Durchlässe, die in der oder den Trennwänden vorgesehen sind, mit dem Katalysatorbehälter verbunden ist, um die Abgase im Betrieb durch die Katalysatorelemente zum jeweiligen Auslass zu leiten. Erfindungsgemäss ist am jeweiligen Einlassstutzen (7a, 7a', 7.1a, 7.1a', 7.1a", 7.2a, 7.2a', 7.2a") ausgangsseitig ein Diffusor (15a) ausgebildet, so dass der jeweilige Einlassstutzen im Betrieb als Strahlpumpe (15) für das Reduktionsmittel wirksam ist.

Vorteilhafterweise ist der Innenraum des Abgassammlers durch die eine oder mehreren, jeweils in Längsrichtung verlaufenden Trennwände vom Innenraum des Katalysatorbehälters abgegrenzt.

In einer vorteilhaften Ausführungsform sind der Abgassammler und der Katalysatorbehälter jeweils rohrförmig und/oder im Wesentlichen zylinderförmig ausgebildet. In einer weiteren vorteilhaften Ausführungsform hat der Abgassammler und der Katalysatorbehälter jeweils eine in Längsrichtung verlaufende Abplattung, wobei der Abgassammler und der Katalysatorbehälter im Bereich der jeweiligen Abplattung aneinanderstossen, und wobei die eine oder mehreren, jeweils in Längsrichtung verlaufenden Trennwände in diesem Bereich vorgesehen sind.

Unabhängig von den oben beschriebenen Ausführungsformen und -varianten sind die Katalysatorelemente vorteilhafterweise so angeordnet, dass sie in Längsrichtung des Katalysatorbehälters durchströmt werden können.

Mit Vorteil ist im Bereich des oder der Auslässe jeweils ein Ventil vorgesehen, um den Abgassammler direkt mit dem jeweiligen Auslass zu verbinden, so dass der Katalysator bei Bedarf umgangen werden kann, beispielsweise indem in der Trennwand beim Öffnen des Ventils ein Durchlass freigegeben wird. In einer vorteilhaften Ausführungsvariante ist das Ventil als Klappenventil ausgebildet, wobei die Drehachse des Klappenventils vorteilhafterweise in Längsrichtung des Katalysatorbehälters angeordnet ist, falls der jeweilige Auslass, in dessen Bereich sich das Klappenventil befindet, an einer Längsseite des Katalysatorbehälters ausgebildet ist, und/oder wobei die Drehachse des Klappenventils vorteilhafterweise quer zur Längsrichtung des Katalysatorbehälters angeordnet ist, falls der jeweilige Auslass, in dessen Bereich sich das Klappenventil befindet, an einer Stirnseite des Katalysatorbehälters ausgebildet ist.

In einer weiteren vorteilhaften Ausführungsform der Vorrichtung ist jeweils eine Düse zum Einspritzen von Reduktionsmittel in den Einlassstutzen des Abgassammlers vorgesehen und/oder es können in den Einlassstutzen des Abgassammlers jeweils eine Zuführung und/oder eine oder mehrere, über den Umfang verteilte Öffnungen vorgesehen sein, um Reduktionsmittel zuzuführen und dem Abgas zuzumischen. Weiter kann der jeweilige Einlassstutzen ausgangsseitig erweitert und/oder am jeweiligen Einlassstutzen ausgangsseitig ein Diffusor ausgebildet sein, so dass der jeweilige Einlassstutzen im Betrieb als Strahlpumpe für das Reduktionsmittel wirksam ist.

In einer weiteren vorteilhaften Ausführungsform umfasst die Vorrichtung mindestens ein Mischrohr, das sich jeweils vom Abgassammler durch einen Durchlass in den Katalysatorbehälter erstreckt, und in dem jeweils ein oder mehrere Düsen zum Einspritzen von Reduktionsmittel vorgesehen sind.

Unabhängig von den oben beschriebenen Ausführungsformen und -varianten kann die Vorrichtung zusätzlich einen externen Reaktor oder Verdampfer zur Erzeugung von gasförmigem Ammoniak umfassen, wobei der Reaktor oder Verdampfer mit den Düsen zum Einspritzen von Reduktionsmittel oder mit der Zuführung oder mit der einen oder den mehreren, über den Umfang verteilten Öffnungen im jeweiligen Einlassstutzen verbunden ist, um dem Abgas gasförmigen Ammoniak als Reduktionsmittel zuzumischen.

Weiter umfasst die Erfindung einen Grossdieselmotor, insbesondere einen Zweitakt-Grossdieselmotor, der eine Vorrichtung gemäss einer der oben beschriebenen Ausführungsformen und -varianten enthält. Mit Vorteil enthält der Grossdieselmotor zusätzlich einen oder mehrere Abgasturbolader, wobei die Vorrichtung zwischen den Auslassventilen des Grossdieselmotors und dem oder den Abgasturboladern angeordnet ist.

In dem erfindungsgemässen Verfahren zur Abgasnachbehandlung für einen Grossdieselmotor, insbesondere einen Zweitakt-Grossdieselmotor, erzeugt der Grossdieselmotor im Betrieb Abgase, wobei der Grossdieselmotor eine Vorrichtung mit einem länglichen Abgassammler mit mehreren, über dessen Längsrichtung verteilten Einlässen und einen länglichen, mit dem Abgassammler verbundenen Katalysatorbehälter umfasst, in dem mehrere Katalysatorelemente angeordnet sind und der der einen oder mehrere Auslässe hat, und wobei die Abgase über die Einlässe vom Abgassammler aufgenommen werden. Typisch sind der Abgassammler und der Katalysatorbehälter in einer Baueinheit zusammengefasst. In dem Verfahren werden der Abgassammler und der Katalysatorbehälter im Wesentlichen parallel nebeneinander angeordnet und durch mindestens eine, jeweils in Längsrichtung verlaufende Trennwand voneinander abgegrenzt, wobei die Abgase über einen oder mehrere Durchlässe, die in der oder den Trennwänden vorgesehen sind, vom Abgassammler in den Katalysatorbehälter und in demselben durch die Katalysatorelemente zum jeweiligen Auslass geleitet werden.

In einer vorteilhaften Ausführungsform des Verfahrens werden den Abgasen Reduktionsmittel zugemischt, wenn die Auslassventile geöffnet sind, oder das Reduktionsmittel wird kontinuierlich in den Abgassammler eingebracht. In einer weiteren vorteilhaften Ausführungsform des Verfahrens werden den Abgasen in einem Mischrohr kontinuierlich Reduktionsmittel zugemischt.

Die erfindungsgemässe Vorrichtung und das erfindungsgemässe Verfahren eignen sich zum Betrieb von stationären und beweglichen Zweitakt- und Viertakt-Dieselmotoren und Zweitakt- und Viertakt-Grossdieselmotoren, insbesondere für Viertakt-Grossdieselmotoren mit einer Zylinderbohrung von mehr als 160 mm oder mehr als 200 mm Durchmesser beziehungsweise für Zweitakt-Grossdieselmotoren mit einer Zylinderbohrung von mehr als 270 mm oder mehr als 300 mm Durchmesser.

Die erfindungsgemässe Vorrichtung und das erfindungsgemässe Verfahren zur Abgasnachbehandlung für einen Grossdieselmotor sowie der Grossdieselmotor mit einer derartigen Vorrichtung haben den Vorteil, dass sich die Vorrichtung an Stelle des bisherigen Abgassammelrohrs, d.h. bei Inline-Anordnung der Zylinder normalerweise neben den Zylindern und bei V-Anordnung der Zylinder normalerweise zwischen den Zylindern, in den Grossdieselmotor einfügen lässt, ohne dadurch die Gesamthöhe oder Gesamtbreite des Grossdieselmotors zu vergrössern. Zum Einfügen der Vorrichtung sind lediglich geringfügige Änderungen des Grossdieselmotors erforderlich, wie beispielsweise das Umplatzieren eines Ventilators oder ein geänderter Verlauf der betroffenen Verbindungsleitungen. Ein weiterer Vorteil besteht darin, dass sich die beschriebene Vorrichtung und das beschriebene Verfahren ab der angegebenen Mindestgrösse für alle Baugrössen von Grossdieselmotoren eignen.

Die beschriebenen Ausführungsformen und -varianten der Vorrichtung und des Verfahrens ermöglichen, eine vernünftige Durchflussqualität durch die Katalysatorelemente sicherzustellen, d.h. eine genügende Abgasnachbehandlung, ohne dass die dadurch verursachte Erhöhung des Durchflusswiderstand störend in Erscheinung tritt.

Die obige Beschreibung von Ausführungsformen und -varianten dient lediglich als Beispiel. Weitere vorteilhafte Ausführungsformen gehen aus den abhängigen Ansprüchen und der Zeichnung hervor. Darüber hinaus können im Rahmen der vorliegenden Erfindung auch einzelne Merkmale aus den beschriebenen oder gezeigten Ausführungsformen und -varianten miteinander kombiniert werden, um neue Ausführungsformen zu bilden.

Im Folgenden wird die Erfindung an Hand der Ausführungsbeispiele und an Hand der Zeichnung näher erläutert. Es zeigen
- Fig. 1: ein Ausführungsbeispiel eines Grossdieselmotors gemäss vorliegender Erfindung,
- Fig. 2: ein Ausführungsbeispiel einer Vorrichtung gemäss vorliegender Erfindung,
- Fig. 2A, 2B: jeweils einen Querschnitt durch das Ausführungsbeispiel aus Fig. 2,
- Fig. 3: ein zweites Ausführungsbeispiel einer Vorrichtung gemäss vorliegender Erfindung,
- Fig. 4: ein drittes Ausführungsbeispiel einer Vorrichtung gemäss vorliegender Erfindung,
- Fig. 5: ein weiteres Ausführungsbeispiel einer Vorrichtung gemäss vorliegender Erfindung mit zusätzlichen Mischrohren,
- Fig. 5A, 5B: jeweils einen Querschnitt durch das Ausführungsbeispiel aus Fig. 5,
- Fig. 6 A-C: drei Ausführungsvarianten von Mischrohren, und
- Fig. 7, 7A: ein weiteres Ausführungsbeispiel einer Vorrichtung gemäss vorliegender Erfindung mit einer Reaktionsmitteleinbringung für gasförmigen Ammoniak.

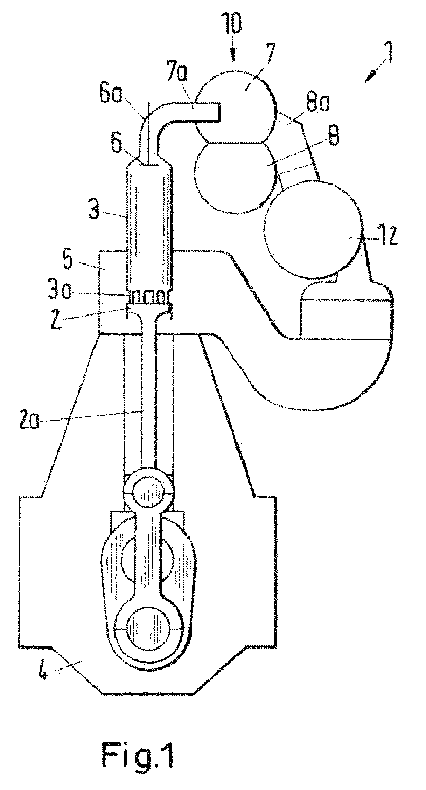

Fig. 1 zeigt ein Ausführungsbeispiel eines Grossdieselmotors 1 gemäss vorliegender Erfindung. Typisch enthalten Grossdieselmotoren und insbesondere Zweitakt-Grossdieselmotoren, wie sie beispielsweise in Schiffen und Kraftwerken verwendet werden, eine oder mehrere der folgenden Komponenten: Eine Kurbelwelle, die in einem Kurbelwellengehäuse 4 drehbar gelagert ist, mindestens einen Kreuzkopf und mindestens einen Kolben 2, der in einer Zylinderlaufbuchse 3 bewegbar angeordnet ist. In der Regel ist der Kolben 2 jeweils über eine Kolbenstange 2a mit dem Kreuzkopf verbunden und der Kreuzkopf über jeweils eine Schubstange mit der Kurbelwelle, um diese anzutreiben. Die Zylinderlaufbuchse 3 wird normalerweise gegen oben durch einen Zylinderdeckel abgeschlossen, so dass zwischen dem Kolben und dem Zylinderdeckel ein Zylinderraum, auch Brennraum genannt, entsteht.

In modernen Zweitakt-Grossdieselmotoren ist meist eine Längsspülung des Zylinderraums vorgesehen, d.h. die Spülluft strömt über Spülschlitze 3a in der Zylinderlaufbuchse 3 in den Zylinderraum, sobald sich der Kolben 2 unterhalb der Spülschlitze 3a befindet. Die Spülluft durchströmt den Zylinderraum und drängt die Abgase der Verbrennung durch ein oder mehrere Auslassventile 4 im Zylinderdeckel und durch eine oder mehrere Abgaskrümmer 6a und Einlassstutzen 7a in einen Abgassammler 7.

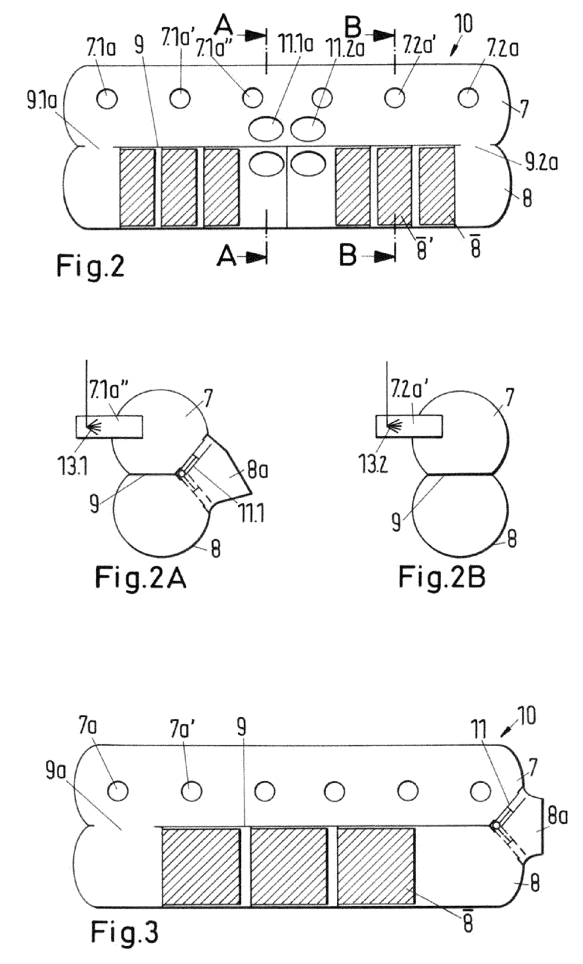

Der Grossdieselmotor 1 gemäss vorliegender Erfindung enthält eine Vorrichtung 10 zur Abgasnachbehandlung, die einen länglichen Abgassammler 7 mit mehreren, über dessen Längsrichtung verteilten Einlassstutzen 7a zur Aufnahme der Abgase des Grossdieselmotors und einen länglichen, mit dem Abgassammler verbundenen Katalysatorbehälter 8 umfasst, in dem mehrere Katalysatorelemente angeordnet sind, und der einen oder mehrere Auslässe 8a hat. Die Vorrichtung 10 zeichnet sich dadurch aus, dass der Abgassammler 7 und der Katalysatorbehälter 8 im Wesentlichen parallel nebeneinander angeordnet und durch mindestens eine, jeweils in Längsrichtung verlaufende Trennwand voneinander abgegrenzt sind, dass der Abgassammler über einen oder mehrere Durchlässe, die in der oder den Trennwänden vorgesehen sind, mit dem Katalysatorbehälter verbunden ist, um die Abgase im Betrieb durch die Katalysatorelemente zum jeweiligen Auslass 8a zu leiten. Ein Ausführungsbeispiel der Vorrichtung 10 zur Abgasnachbehandlung ist in Fig. 2 gezeigt.

In einer vorteilhaften Ausführungsform enthält der Grossdieselmotor 1 zusätzlich einen oder mehrere Abgasturbolader 12, wobei die Vorrichtung 10 zwischen den Auslassventilen 4 des Grossdieselmotors und dem oder den Abgasturboladern 12 angeordnet ist. Zweckmässigerweise ist jeweils ein Auslass 8a des Katalysatorbehälters 8 mit dem jeweiligen Turbolader 12 verbunden. Nach der Entspannung der Abgase im Turbolader werden die Abgase üblicherweise über ein Auspuffsystem ins Freie geleitet.

Fig. 2 zeigt ein Ausführungsbeispiel einer Vorrichtung gemäss vorliegender Erfindung im Längsschnitt, und die Figuren 2A und 2B zeigen jeweils einen Querschnitt durch das Ausführungsbeispiel aus Fig. 2. Die gezeigte Vorrichtung 10 zur Abgasnachbehandlung für einen Grossdieselmotor, insbesondere einen Zweitakt-Grossdieselmotor, umfasst einen länglichen Abgassammler 7 mit mehreren, über dessen Längsrichtung verteilten Einlässen 7.1a, 7.1a', 7.1a", 7.2a, 7.2a' zur Aufnahme der Abgase des Grossdieselmotors und einen länglichen, mit dem Abgassammler 7 verbundenen Katalysatorbehälter 8, in dem mehrere Katalysatorelemente 8̅, 8̅' angeordnet sind, und der einen oder mehrere Auslässe 8a hat. Die Vorrichtung 10 zeichnet sich dadurch aus, dass der Abgassammler 7 und der Katalysatorbehälter 8 im Wesentlichen parallel nebeneinander angeordnet und durch mindestens eine, jeweils in Längsrichtung verlaufende Trennwand 9 voneinander abgegrenzt sind, dass der Abgassammler 7 über einen oder mehrere Durchlässe 9.1a, 9.2a, die in der oder den Trennwänden 9 vorgesehen sind, mit dem Katalysatorbehälter 8 verbunden ist, um die Abgase im Betrieb durch die Katalysatorelemente 8̅, 8̅' zum jeweiligen Auslass zu leiten.

Vorteilhafterweise ist der Innenraum des Abgassammlers 7 durch die eine oder mehreren, jeweils in Längsrichtung verlaufenden Trennwände 9 vom Innenraum des Katalysatorbehälters 8 abgegrenzt.

An den Enden des Abgassammlers 7 und des Katalysatorbehälters 8 können zum Beispiel massive Platten oder geformte Böden vorgesehen werden, die beispielsweise mit Dehnschrauben befestigt werden. Die Katalysatorelemente 8̅, 8̅' werden vorteilhafterweise durch die Stirnseiten eingebracht. Bei zunehmender Baugrösse der Grossdieselmotoren können in der Mitte liegende Katalysatorelemente durch den Abgassammler 8 eingebracht und ausgetauscht werden.

In einer vorteilhaften Ausführungsform sind der Abgassammler 7 und der Katalysatorbehälter 8 jeweils rohrförmig und/oder im Wesentlichen zylinderförmig ausgebildet. In einer weiteren vorteilhaften Ausführungsform hat der Abgassammler 7 und der Katalysatorbehälter 8 jeweils eine in Längsrichtung verlaufende Abplattung, wobei der Abgassammler und der Katalysatorbehälter im Bereich der jeweiligen Abplattung aneinanderstossen, und wobei die eine oder mehreren, jeweils in Längsrichtung verlaufenden Trennwände 9 in diesem Bereich vorgesehen sind.

Unabhängig von den oben beschriebenen Ausführungsformen und -varianten sind die Katalysatorelemente 8̅, 8̅' vorteilhafterweise so angeordnet, dass sie in Längsrichtung des Katalysatorbehälters 8 durchströmt werden können.

Mit Vorteil ist im Bereich des oder der Auslässe 8a jeweils ein Ventil 11.1 vorgesehen, um den Abgassammler 7 direkt mit dem jeweiligen Auslass 8a zu verbinden, so dass der Katalysator bei Bedarf umgangen werden kann, beispielsweise indem in der Trennwand 9 beim Öffnen des Ventils 11.1 ein Durchlass 11.1 a, 11.2a freigegeben wird. In einer vorteilhaften Ausführungsvariante ist das Ventil 11.1 als Klappenventil ausgebildet, wobei die Drehachse des Klappenventils vorteilhafterweise in Längsrichtung des Katalysatorbehälters 8 angeordnet ist, falls der jeweilige Auslass 8a, in dessen Bereich sich das Klappenventil befindet, an einer Längsseite des Katalysatorbehälters ausgebildet ist, und/oder wobei die Drehachse des Klappenventils vorteilhafterweise quer zur Längsrichtung des Katalysatorbehälters 8 angeordnet ist, falls der jeweilige Auslass 8a, in dessen Bereich sich das Klappenventil befindet, an einer Stirnseite des Katalysatorbehälters ausgebildet ist.

Bei Bedarf können an den Durchgängen 9.1, 9.2 der Trennwand 9 zusätzliche Ventile vorgesehen werden, um die Katalysatorelemente 8̅, 8̅' vollständig vom Abgasstrom abzutrennen. Die zusätzlichen Ventile und die Ventile 11.1 im Bereich des oder der Auslässe 8a können jeweils als beidseitig dichtende Klappe und speziell als Klappe mit beidseitigen Dichtkegeln ausgebildet sein, die mit Vorteil federnd gelagert ist, und die beispielsweise über eine Zahnstange und einen mit derselben verbundenen Hydraulikzylinder angetrieben werden kann. Falls mehrere Ventile 11.1 vorhanden sind, kann es vorteilhaft sein, eine durchgehende Betätigungsstange vorzusehen, um eine Gruppe von Ventilen oder sämtliche Ventile gemeinsam anzutreiben.

In einer weiteren vorteilhaften Ausführungsform der Vorrichtung ist jeweils eine Düse 13.1, 13.2 zum Einspritzen von Reduktionsmittel in den Einlassstutzen des Abgassammlers vorgesehen und/oder es können in den Einlassstutzen des Abgassammlers jeweils eine Zuführung und/oder eine oder mehrere, über den Umfang verteilte Öffnungen vorgesehen sein, um Reduktionsmittel zuzuführen und dem Abgas zuzumischen. Weiter kann der jeweilige Einlassstutzen ausgangsseitig erweitert und/oder am jeweiligen Einlassstutzen ausgangsseitig ein Diffusor ausgebildet sein, so dass der jeweilige Einlassstutzen im Betrieb als Strahlpumpe für das Reduktionsmittel wirksam ist.

Die in Fig. 2 gezeigte Vorrichtung 10 zur Abgasnachbehandlung eignet sich insbesondere für Grossdieselmotoren mittlerer Baugrösse. Bei dieser Baugrösse werden die Abgase üblicherweise von der Mitte des Katalysatorbehälters einem oder zwei Turboladern zugeführt. In diesem Fall sind die Durchlässe 9.1, 9.2 in der Trennwand typisch, wie in Fig. 2 gezeigt, an den Enden des Katalysatorbehälters 8 angeordnet. Bei Bedarf kann der Katalysatorbehälter 8 unabhängig von den oben beschriebenen Ausführungsformen und -varianten, in der Mitte, wie in Fig. 2 gezeigt, mit einer radial angeordneten Abtrennwand in zwei Hälften geteilt werden, wobei beide Hälften über jeweils einen Auslass 8a verfügen, der beispielsweise mit jeweils einem Turbolader verbunden sein kann.

Fig. 3 zeigt ein zweites Ausführungsbeispiel einer Vorrichtung 10 gemäss vorliegender Erfindung im Längsschnitt. Das in Fig. 3 gezeigte Ausführungsbeispiel eignet sich insbesondere für kleinere Baugrössen. Die gezeigte Vorrichtung 10 zur Abgasnachbehandlung für einen Grossdieselmotor, insbesondere einen Zweitakt-Grossdieselmotor, umfasst einen länglichen Abgassammler 7 mit mehreren, über dessen Längsrichtung verteilten Einlässen 7a, 7a' zur Aufnahme der Abgase des Grossdieselmotors und einen länglichen, mit dem Abgassammler 7 verbundenen Katalysatorbehälter 8, in dem mehrere Katalysatorelemente 8̅ angeordnet sind, und der einen oder mehrere Auslässe 8a hat. Die Vorrichtung 10 zeichnet sich dadurch aus, dass der Abgassammler 7 und der Katalysatorbehälter 8 im Wesentlichen parallel nebeneinander angeordnet und durch mindestens eine, jeweils in Längsrichtung verlaufende Trennwand 9 voneinander abgegrenzt sind, dass der Abgassammler 7 über einen oder mehrere Durchlässe 9a die in der oder den Trennwänden 9 vorgesehen sind, mit dem Katalysatorbehälter 8 verbunden ist, um die Abgase im Betrieb durch die Katalysatorelemente 8̅ zum jeweiligen Auslass zu leiten.

Mit Vorteil ist im Bereich des oder der Auslässe 8a jeweils ein Ventil 11 vorgesehen, um den Abgassammler 7 direkt mit dem jeweiligen Auslass 8a zu verbinden, so dass der Katalysator bei Bedarf umgangen werden kann, beispielsweise indem in der Trennwand 9 beim Öffnen des Ventils 11 ein Durchlass freigegeben wird. In einer vorteilhaften Ausführungsvariante ist das Ventil 11 als Klappenventil ausgebildet, wobei die Drehachse des Klappenventils vorteilhafterweise quer zur Längsrichtung des Katalysatorbehälters 8 angeordnet ist, falls der jeweilige Auslass 8a, in dessen Bereich sich das Klappenventil befindet, wie in Fig. 3 gezeigt, an einer Stirnseite des Katalysatorbehälters ausgebildet ist.

Bezüglich weiterer Ausführungsformen und -varianten zu dem in Fig. 3 gezeigten Ausführungsbeispiel wird auf die oben stehende Beschreibung des ersten Ausführungsbeispiel verwiesen, das in Fig. 2 gezeigt ist.

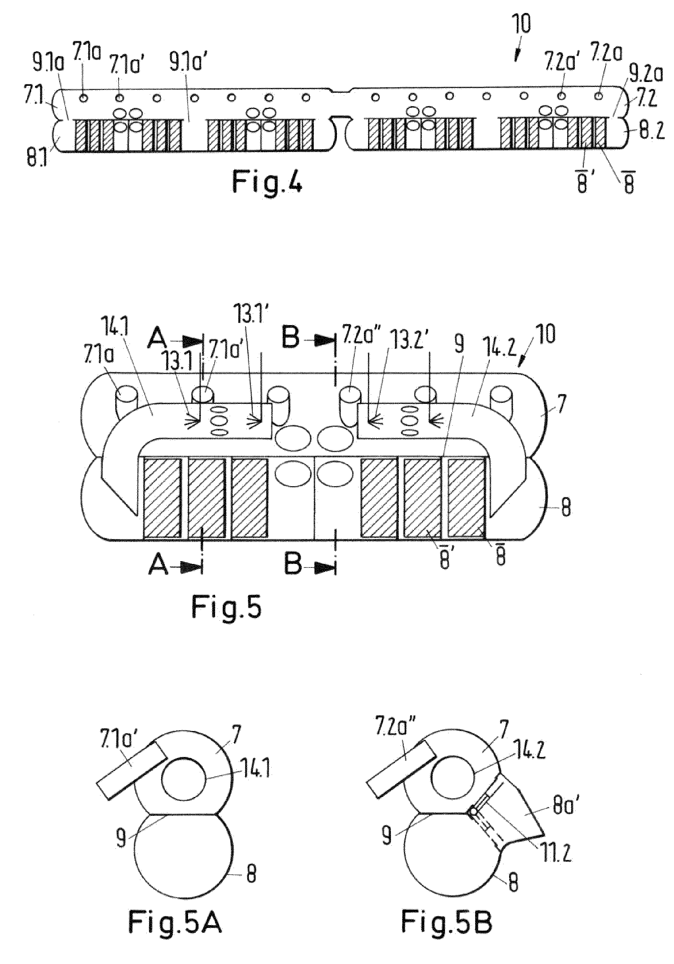

Fig. 4 zeigt ein drittes Ausführungsbeispiel einer Vorrichtung 10 gemäss vorliegender Erfindung im Längsschnitt. Das in Fig. 4 gezeigte Ausführungsbeispiel eignet sich insbesondere für grössere Baugrössen, beispielsweise für Grossdieselmotoren mit zehn und mehr Zylindern. Die gezeigte Vorrichtung 10 zur Abgasnachbehandlung für einen Grossdieselmotor, insbesondere einen Zweitakt-Grossdieselmotor, umfasst einen länglichen Abgassammler, der, wie in Fig. 4 gezeigt, in zwei Hälften 7.1, 7.2 gegliedert sein kann, mit mehreren, über die Längsrichtung des Abgassammlers verteilten Einlässen 7.1 a, 7.1 a', 7.2a, 7.2a' zur Aufnahme der Abgase des Grossdieselmotors und mindestens einen länglichen, mit dem Abgassammler 7.1, 7.2 verbundenen Katalysatorbehälter 8.1, 8.2, in dem mehrere Katalysatorelemente 8̅, 8̅' angeordnet sind, und der einen oder mehrere Auslässe hat. Bei grösseren Baugrössen wird der Katalysatorbehälter zweckmässigerweise, wie in Fig. 4 gezeigt, in zwei oder gegebenenfalls mehr Behälter aufgeteilt.

Die Vorrichtung 10 zeichnet sich dadurch aus, dass der Abgassammler 7.1, 7.2 und der Katalysatorbehälter 8.1, 8.2 jeweils im Wesentlichen parallel nebeneinander angeordnet und durch mindestens eine, jeweils in Längsrichtung verlaufende Trennwand voneinander abgegrenzt sind, dass der Abgassammler 7.1, 7.2 über einen oder mehrere Durchlässe 9.1a, 9.1a', die in der oder den Trennwänden vorgesehen sind, mit dem Katalysatorbehälter 8.1, 8.2 verbunden ist, um die Abgase im Betrieb durch die Katalysatorelemente 8̅, 8̅' zum jeweiligen Auslass zu leiten.

Bezüglich möglicher Ausführungsformen und -varianten zu dem in Fig. 4 gezeigten Ausführungsbeispiel wird auf die oben stehende Beschreibung des ersten Ausführungsbeispiel verwiesen, das in Fig. 2 gezeigt ist.

Fig. 5 zeigt ein weiteres Ausführungsbeispiel einer Vorrichtung gemäss vorliegender Erfindung mit zusätzlichen Mischrohren, und die Figuren 5A und 5B zeigen jeweils einen Querschnitt durch das Ausführungsbeispiel aus Fig. 5. In dem gezeigten Ausführungsbeispiel umfasst die Vorrichtung 10 zur Abgasnachbehandlung für einen Grossdieselmotor, insbesondere einen Zweitakt-Grossdieselmotor, einen länglichen Abgassammler 7 mit mehreren, über dessen Längsrichtung verteilten Einlässen 7.1 a, 7.1 a', 7.2a" zur Aufnahme der Abgase des Grossdieselmotors und einen länglichen, mit dem Abgassammler 7 verbundenen Katalysatorbehälter 8, in dem mehrere Katalysatorelemente 8̅, 8̅' angeordnet sind, und der einen oder mehrere Auslässe 8a hat. Die Vorrichtung 10 zeichnet sich dadurch aus, dass der Abgassammler 7 und der Katalysatorbehälter 8 im Wesentlichen parallel nebeneinander angeordnet und durch mindestens eine, jeweils in Längsrichtung verlaufende Trennwand 9 voneinander abgegrenzt sind, dass der Abgassammler 7 über einen oder mehrere Durchlässe, die in der oder den Trennwänden 9 vorgesehen sind, mit dem Katalysatorbehälter 8 verbunden ist, um die Abgase im Betrieb durch die Katalysatorelemente 8̅, 8̅' zum jeweiligen Auslass zu leiten.

In dem in Fig. 5 gezeigten Ausführungsbeispiel umfasst die Vorrichtung 10 zusätzlich mindestens ein Mischrohr 14.1, 14.2, das sich jeweils vom Abgassammler 7 durch einen Durchlass in den Katalysatorbehälter 8 erstreckt, und in dem jeweils ein oder mehrere Düsen 13.1, 13.1' 13.2' zum Einspritzen von Reduktionsmittel vorgesehen sind. Durch zusätzliche Perforation in der Mischrohrwand können das Durchmischen und das Schwingungsverhalten günstig beeinflusst werden. Von Vorteil ist zudem, dass das oder die Mischrohre 14. 1 14.2 auf Grund ihrer Anordnung im Abgassammler 7 aussen von heissen Abgasen beaufschlagt werden, wodurch die Temperatur erhöht und die Bildung von Ablagerungen vermindert werden kann. Darüber hinaus kann eine zusätzliche Beheizung der Mischrohre durch zum Beispiel eine elektrische Heizung oder durch heisse Abgase vorgesehen werden, welche durch Vorauspuffabtrennung oder ein geeignetes Staurohr gewonnen werden.

Bezüglich weiterer Ausführungsformen und -varianten zu dem in Fig. 5 gezeigten Ausführungsbeispiel wird auf die oben stehenden Beschreibungen des ersten, zweiten und dritten Ausführungsbeispiels verwiesen, die in den Figuren 2 bis 4 gezeigt sind.

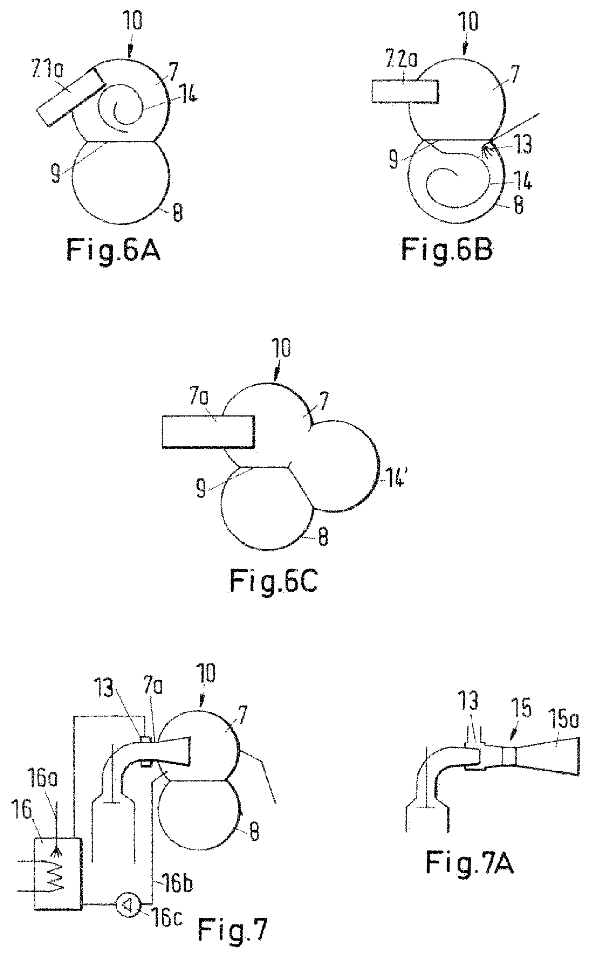

Die Figuren 6 A-C zeigen Vorrichtungen 10 zur Abgasnachbehandlung mit drei verschiedene Ausführungsvarianten von Mischrohren. Die in Fig. 6A gezeigte Vorrichtung 10 zur Abgasnachbehandlung enthält ein Mischrohr 14, dessen Formgebung eine Druckrückgewinnung aus dem Drall der Abgase bei Eintritt in das Mischrohr erlaubt. Fig. 6B zeigt eine Vorrichtung 10 zur Abgasnachbehandlung mit einem Mischrohr 14, das im Katalysatorbehälter 8 spiralförmig ausgebildet ist, wobei am Eingang des spiralförmigen Mischrohres ist eine Düse 13 zum Einspritzen von Reduktionsmittel vorgesehen. Die Vorrichtung 10 zur Abgasnachbehandlung kann aber auch, wie in Fig. 6C gezeigt, ein Mischrohr 14' enthalten, das extern am Abgassammler 7 und am Katalysatorbehälter 8 ausgebildet ist.

Fig. 7 zeigt ein weiteres Ausführungsbeispiel einer Vorrichtung 10 gemäss vorliegender Erfindung mit einer Reaktionsmitteleinbringung für gasförmigen Ammoniak. Das in Fig. 7 gezeigte Ausführungsbeispiel einer Vorrichtung 10 zur Abgasnachbehandlung für einen Grossdieselmotor, insbesondere einen Zweitakt-Grossdieselmotor umfasst einen länglichen Abgassammler 7 mit mehreren, über dessen Längsrichtung verteilten Einlässen 7a zur Aufnahme der Abgase des Grossdieselmotors und einen länglichen, mit dem Abgassammler 7 verbundenen Katalysatorbehälter 8, in dem mehrere Katalysatorelemente angeordnet sind, und der einen oder mehrere Auslässe hat, und unterscheidet sich von den in Zusammenhang mit den Figuren 2 bis 5 beschriebenen Ausführungsbeispielen lediglich dadurch, dass die Vorrichtung 10 zusätzlich einen externen Reaktor oder Verdampfer 16 zur Erzeugung von gasförmigem Ammoniak umfasst, wobei der Reaktor oder Verdampfer mit Düsen zum Einspritzen von Reduktionsmittel und/oder mit Zuführungen 13 oder über den Umfang verteilte Öffnungen verbunden sind, die jeweils in den Einlassstutzen 7a des Abgassammlers 7 vorgesehen sind, um dem Abgas gasförmigen Ammoniak als Reduktionsmittel zuzumischen, und dass in einer vorteilhaften Ausführungsvariante der jeweilige Einlassstutzen 7a ausgangsseitig erweitert und/oder am jeweiligen Einlassstutzen ausgangsseitig ein Diffusor 15a ausgebildet ist, so dass der Einlassstutzen im Betrieb als Strahlpumpe 15 für das Reduktionsmittel wirksam ist (siehe Fig. 7A). Wahlweise kann der gasförmige Ammoniak statt in die Einlassstutzen in ein in Fig. 7 nicht gezeigtes Mischrohr zugeführt werden.

Bezüglich möglicher Ausführungsformen und -varianten der Vorrichtung 10 zur Abgasnachbehandlung wird auf die oben stehenden Beschreibungen der in den Figuren 2 bis 5 gezeigten Ausführungsbeispiele verwiesen.

In einer vorteilhaften Ausführungsform wird über eine Zufuhr 16a eine Harnstofflösung oder andere Ammoniak erzeugende Vorläufersubstanz in den Reaktor 16 eingebracht und dem Reaktor zusätzlich über eine Zuleitung 16b Abgase zugeführt, die beispielsweise dem Abgassammler 7 entnommen werden können. Unter Einwirkung der heissen Abgase entsteht im Reaktor 16 gasförmiger Ammoniak. Der Verdampfer oder Reaktor 16 kann zum Beispiel aus hochwertigem Material gefertigt sein, das korrosionsbeständig ist gegen die verwendeten Substanzen. Zum Anfahren des kalten Grossdieselmotors kann zum Beispiel im Reaktor eine Zusatzheizung und in der Zuleitung 16b für die Abgase ein Gebläse 16c für die Förderung der Abgase vorgesehen sein. Im Normalbetrieb erfolgt die Förderung und das Mischen der Abgase und des gasförmigen Ammoniaks vorteilhafterweise mittels Strahlpumpen, die am jeweiligen Einlassstutzen 7a ausgebildet sind. Ein Ausführungsbeispiel einer derartigen Strahlpumpe 15 ist in Fig. 7A gezeigt. Im gezeigten Ausführungsbeispiel wird das Reduktionsmittel über eine Zuführung 13 zugeführt, die beispielsweise ringförmig ausgeführt ist. Am jeweiligen Einlassstutzen ist ausgangsseitig ein Diffusor 15a ausgebildet ist, so dass der Einlassstutzen im Betrieb als Strahlpumpe 15 für das Reduktionsmittel wirksam ist.

Die in Fig. 7 gezeigte Reaktionsmitteleinbringung mit einem externen Reaktor oder Verdampfer 16 zur Erzeugung von gasförmigem Ammoniak und die Ausführungsvariante, in der die Förderung des gasförmigen Ammoniaks mittels Strahlpumpen 15 erfolgt, kann auch als eigenständige Erfindung betrachtet werden, die unabhängig ist von der Ausführung der übrigen Vorrichtung zur Abgasnachbehandlung in einem Grossdieselmotor. Die Erzeugung von gasförmigem Ammoniak in einem externen Reaktor oder Verdampfer vermeidet die spezifischen Nachteile, wie korrosive Wirkung der Harnstofflösung und Ablagerungen, die mit der üblichen Eindüsung von Harnstoff in den Abgasstrom verbunden sind.

Das erfindungsgemässe Verfahren wird im Folgenden an Hand der Figuren 1 bis 6 beschrieben. In dem erfindungsgemässen Verfahren zur Abgasnachbehandlung für einen Grossdieselmotor, insbesondere einen Zweitakt-Grossdieselmotor, erzeugt der Grossdieselmotor 1 im Betrieb Abgase, wobei der Grossdieselmotor eine Vorrichtung 10 mit einem länglichen Abgassammler 7, 7.1, 7.2 mit mehreren, über dessen Längsrichtung verteilten Einlässen 7a, 7a', 7.1 a, 7.1 a', 7.1 a", 7.2a, 7.2a', 7.2a" und einen länglichen, mit dem Abgassammler verbundenen Katalysatorbehälter 8, 8.1, 8.2 umfasst, in dem mehrere Katalysatorelemente 8̅, 8̅' angeordnet sind und der der einen oder mehrere Auslässe 8a hat, und wobei die Abgase über die Einlässe vom Abgassammler 7, 7.1, 7.2 aufgenommen werden. Typisch sind der Abgassammler und der Katalysatorbehälter in einer Baueinheit zusammengefasst. In dem Verfahren werden der Abgassammler 7, 7.1, 7.2 und der Katalysatorbehälter 8, 8.1, 8.2 im Wesentlichen parallel nebeneinander angeordnet und durch mindestens eine, jeweils in Längsrichtung verlaufende Trennwand 9 voneinander abgegrenzt, wobei die Abgase über einen oder mehrere Durchlässe 9a, 9.1a, 9.1a', 9.2a, die in der oder den Trennwänden 9 vorgesehen sind, vom Abgassammler 7, 7.1, 7.2 in den Katalysatorbehälter 8, 8.1, 8.2 und in demselben durch die Katalysatorelemente 8̅, 8̅' zum jeweiligen Auslass 8a geleitet werden.

In einer vorteilhaften Ausführungsform des Verfahrens werden den Abgasen Reduktionsmittel zugemischt, wenn die Auslassventile 6 geöffnet sind, oder das Reduktionsmittel wird kontinuierlich in den Abgassammler 7, 7.1, 7.2 eingebracht. In einer weiteren vorteilhaften Ausführungsform des Verfahrens werden den Abgasen in einem Mischrohr 14, 14', 14.1, 14.2 kontinuierlich Reduktionsmittel zugemischt.

In den beschriebenen Ausführungsformen und -varianten der erfindungsgemässen Vorrichtung und des erfindungsgemässen Verfahrens zur Abgasnachbehandlung für einen Grossdieselmotor, insbesondere einen Zweitakt-Grossdieselmotor, werden der Abgassammler und der Katalysatorbehälter sowie fallweise die Aufbereitung des Reduktionsmittels und/oder mögliche Ventile, beispielsweise zum Umgehen des Katalysators, mit Vorteil in einer Baueinheit zusammengefasst, welche typisch dem bisherigen Abgassammelrohr eines Grossdieselmotors ähnlich sieht und an der Stelle des bisherigen Abgassammelrohrs eingebaut werden kann. Besonders vorteilhaft bestehen der Abgassammler und der Katalysatorbehälter aus jeweils einem Rohr mit beispielsweise im Wesentlichen kreisförmigem und typisch annähernd gleich grossem Querschnitt, wobei die Rohre parallel nebeneinander angeordnet und zum Beispiel durch Schweissen miteinander verbunden sind. Typisch ist jeweils an der Stelle, wo die beiden Rohre zusammenstossen, eine Abplattung vorgesehen, welche dazu beiträgt, die Aussenabmessungen der Vorrichtung zu reduzieren, ohne den Innenquerschnitt und die Druckfestigkeit der Rohre über Gebühr herabzusetzen. Diese Anordnung erlaubt einen kompakten Aufbau der Vorrichtung mit wenigen und kurzen Verbindungsleitungen.

## Patentansprüche

1. Vorrichtung (10) zur Abgasnachbehandlung für einen Grossdieselmotor (1), insbesondere einen Zweitakt-Grossdieselmotor, wobei die Vorrichtung (10) einen länglichen Abgassammler (7, 7.1, 7.2) mit mehreren, über dessen Längsrichtung verteilten Einlässen (7a, 7a', 7.1 a, 7.1 a', 7.1 a", 7.2a, 7.2a', 7.2a") zur Aufnahme der Abgase des Grossdieselmotors und einen länglichen, mit dem Abgassammler verbundenen Katalysatorbehälter (8, 8.1, 8.2) umfasst, in dem mehrere Katalysatorelemente (8̅, 8̅') angeordnet sind, und der einen oder mehrere Auslässe (8a) hat, wobei der Abgassammler (7, 7.1, 7.2) und der Katalysatorbehälter (8, 8.1, 8.2) im Wesentlichen parallel nebeneinander angeordnet und durch mindestens eine, jeweils in Längsrichtung verlaufende Trennwand (9) voneinander abgegrenzt sind, dass der Abgassammler (7, 7.1, 7.2) über einen oder mehrere Durchlässe (9a, 9.1a, 9.1a', 9.2a), die in der oder den Trennwänden (9) vorgesehen sind, mit dem Katalysatorbehälter (8, 8.1, 8.2) verbunden ist, um die Abgase im Betrieb durch die Katalysatorelemente (8̅, 8̅') zum jeweiligen Auslass (8a) zu leiten, **dadurch gekennzeichnet, dass** in den Einlassstutzen (7a, 7a', 7.1a, 7.1a', 7.1a", 7.2a, 7.2a', 7.2a") des Abgassammlers (7, 7.1, 7.2) jeweils eine Zuführung (13, 13.1, 13.1', 13.2, 13.2') für ein Reduktionsmittel vorgesehen ist, und am jeweiligen Einlassstutzen (7a, 7a', 7.1a, 7.1a', 7.1a", 7.2a, 7.2a', 7.2a") ausgangsseitig ein Diffusor (15a) ausgebildet ist, so dass der jeweilige Einlassstutzen im Betrieb als Strahlpumpe (15) für das Reduktionsmittel wirksam ist.

2. Vorrichtung nach Anspruch 1, wobei der Abgassammler (7, 7.1, 7.2) und der Katalysatorbehälter (8, 8.1, 8.2) jeweils rohrförmig und/oder im Wesentlichen zylinderförmig ausgebildet sind.

3. Vorrichtung nach einem der Ansprüche 1 oder 2, wobei der Abgassammler (7, 7.1, 7.2) und der Katalysatorbehälter (8, 8.1, 8.2) jeweils eine in Längsrichtung verlaufende Abplattung aufweisen, und wobei der Abgassammler (7, 7.1, 7.2) und der Katalysatorbehälter (8, 8.1, 8.2) im Bereich der jeweiligen Abplattung aneinanderstossen, und in diesem Bereich eine Trennwand (9) vorgesehen ist.

4. Vorrichtung nach einem der vorangehenden Ansprüche, wobei die Katalysatorelemente (8̅, 8̅') in Längsrichtung des Katalysatorbehälters (8, 8.1, 8.2) durchströmbar sind.

5. Vorrichtung nach einem der vorangehenden Ansprüche, wobei im Bereich des oder der Auslässe (8a) jeweils ein Ventil (11, 11.1, 11.2) vorgesehen ist, um den Abgassammler (7, 7.1, 7.2) direkt mit dem jeweiligen Auslass (8a) zu verbinden.

6. Vorrichtung nach Anspruch 5, wobei das Ventil (11, 11.1, 11.2) als Klappenventil ausgebildet ist, und wobei die Drehachse des Klappenventils in Längsrichtung des Katalysatorbehälters (8, 8.1, 8.2) angeordnet ist, falls der jeweilige Auslass (8a), in dessen Bereich sich das Klappenventil befindet, an einer Längsseite des Katalysatorbehälters ausgebildet ist, und/oder wobei die Drehachse des Klappenventils quer zur Längsrichtung des Katalysatorbehälters (8, 8.1, 8.2) angeordnet ist, falls der jeweilige Auslass (8a), in dessen Bereich sich das Klappenventil befindet, an einer Stirnseite des Katalysatorbehälters ausgebildet ist.

7. Vorrichtung nach einem der vorangehenden Ansprüche, wobei in den Einlassstutzen (7a, 7a', 7.1 a, 7.1 a', 7.1 a", 7.2a, 7.2a', 7.2a") des Abgassammlers (7, 7.1, 7.2) jeweils eine Düse (13, 13.1, 13.1', 13.2, 13.2') zum Einspritzen von Reduktionsmittel vorgesehen ist.

8. Vorrichtung nach einem der vorangehenden Ansprüche, wobei in den Einlassstutzen (7a, 7a', 7.1 a, 7.1 a', 7.1 a", 7.2a, 7.2a', 7.2a") des Abgassammlers (7, 7.1, 7.2) jeweils eine oder mehrere, über den Umfang verteilte Öffnungen vorgesehen sind, um das Reduktionsmittel zuzuführen und dem Abgas zuzumischen

9. Vorrichtung nach einem der Ansprüche 1 bis 6 umfassend mindestens ein Mischrohr (14, 14', 14.1, 14.2), das sich jeweils vom Abgassammler (7, 7.1, 7.2) durch einen Durchlass (9a, 9.1a, 9.1a', 9.2a) in den Katalysatorbehälter (8, 8.1, 8.2) erstreckt, und in dem jeweils ein oder mehrere Düsen (13) zum Einspritzen von Reduktionsmittel vorgesehen sind.

10. Vorrichtung nach einem der Ansprüche 7 bis 9 umfassend zusätzlich einen externen Reaktor oder Verdampfer (16) zur Erzeugung von gasförmigem Ammoniak, wobei der Reaktor oder Verdampfer (16) mit den Düsen (13, 13.1, 13.1', 13.2, 13.2') zum Einspritzen von Reduktionsmittel oder mit der Zuführung (13, 13.1, 13.1', 13.2, 13.2') oder mit der einen oder den mehreren, über den Umfang verteilten Öffnungen im jeweiligen Einlassstutzen (7a, 7a', 7.1 a, 7.1 a', 7.1 a", 7.2a, 7.2a', 7.2a") verbunden ist, um dem Abgas gasförmigen Ammoniak als Reduktionsmittel zuzumischen.

11. Grossdieselmotor (1), insbesondere einen Zweitakt-Grossdieselmotor, enthaltend eine Vorrichtung (10) nach einem der Ansprüche 1 bis 10.

12. Grossdieselmotor (1), insbesondere einen Zweitakt-Grossdieselmotor, nach Anspruch 10 enthaltend zusätzlich einen oder mehrere Abgasturbolader (12), wobei die Vorrichtung (10) zwischen den Auslassventilen (6) des Grossdieselmotors (1) und dem oder den Abgasturboladern (12) angeordnet ist.

13. Verfahren zur Abgasnachbehandlung für einen Grossdieselmotor (1), gemäss Anspruch 11 oder 12 , insbesondere einen Zweitakt-Grossdieselmotor, wobei den Abgasen in den Einlassstutzen (7a, 7a', 7.1 a, 7.1 a', 7.1 a", 7.2a, 7.2a', 7.2a") des Abgassammlers (7, 7.1, 7.2) ein Reduktionsmittel zugeführt wird und der jeweilige Einlassstutzen, an dem ausgangsseitig ein Diffusor (15a) ausgebildet ist, im Betrieb als Strahlpumpe (15) für das Reduktionsmittel verwendet wird.

14. Verfahren nach Anspruch 13, wobei den Abgasen die Reduktionsmittel zugemischt werden, wenn die Auslassventile (4) geöffnet sind, oder das Reduktionsmittel kontinuierlich in den Abgassammler (7, 7.1, 7.2) eingebracht wird.

15. Verfahren nach einem der Ansprüche 13 oder 14, wobei den Abgasen in einem Mischrohr (14, 14', 14.1, 14.2) kontinuierlich Reduktionsmittel zugemischt werden.

## Claims

1. An apparatus (10) for exhaust gas aftertreatment for a large diesel engine (1), in particular for a large two-stroke diesel engine, wherein the apparatus (10) includes an elongate exhaust manifold (7, 7.1, 7.2) having a plurality of inlets (7a, 7a', 7.1a, 7.1a', 7.1a", 7.2a, 7.2a', 7.2a") distributed over its longitudinal direction for receiving the exhaust gases of the large diesel engine and includes an elongate catalytic converter container (8, 8.1, 8.2) which is connected to the exhaust manifold, in which a plurality of catalytic converter elements (8̅, 8̅') are arranged and which has one or more outlets (8a), wherein the exhaust manifold (7, 7.1, 7.2) and the catalytic converter container (8, 8.1, 8.2) are arranged substantially in parallel next to one another and are delimited from one another by at least one partition wall (9) respectively extending in the longitudinal direction; and wherein the exhaust manifold (7, 7.1, 7.2) is connected to the catalytic converter container (8, 8.1, 8.2) via one or more ports (9a, 9.1a, 9.1a', 9.2a) which are provided in the partition wall or walls (9) to conduct the exhaust gases to the respective outlet (8a) through the catalytic converter elements (8, 8') in operation, **characterized in that** a respective feed (13, 13.1, 13.1', 13.2, 13.2') for a reductant is provided in the inlet stubs (7a, 7a', 7.1a, 7.1a', 7.1a", 7.2a, 7.2a', 7.2a") of the exhaust manifold (7, 7.1, 7.2) and a diffuser (15a) is formed at the respective inlet stub (7a, 7a', 7.1a, 7.1a', 7.1a", 7.2a, 7.2a', 7.2a") at the outlet side so that the respective inlet stub is active as an ejector pump (15) for the reductant in operation.

2. An apparatus in accordance with claim 1, wherein the exhaust manifold (7, 7.1, 7.2) and the catalytic converter container (8, 8.1, 8.2) are in each case formed in pipe form and/or substantially cylindrically.

3. An apparatus in accordance with one of the claims 1 or 2, wherein the exhaust manifold (7, 7.1, 7.2) and the catalytic converter container (8, 8.1, 8.2) each have a flattened portion respectively extending in the longitudinal direction, and wherein the exhaust manifold (7, 7.1, 7.2) and the catalytic converter container (8, 8.1, 8.2) abut one another in the region of the respective flattened portion and a partition wall (9) is provided in this region.

4. An apparatus in accordance with any one of the preceding claims, wherein the catalytic converter elements (8̅, 8̅') can be flowed through in the longitudinal direction of the catalytic converter container (8, 8.1, 8.2).

5. An apparatus in accordance with any one of the preceding claims, wherein a respective valve (11, 11.1, 11.2) is provided in the region of the outlet or outlets (8a) to connect the exhaust manifold (7, 7.1 7.2) directly to the respective outlet (8a).

6. An apparatus in accordance with claim 5, wherein the valve (11, 11.1, 11.2) is formed as a flap valve, and wherein the axis of rotation of the flap valve is arranged in the longitudinal direction of the catalytic converter container (8, 8.1, 8.2) if the respective outlet (8a) in whose region the flap valve is located is formed at a longitudinal side of the catalytic converter container and/or wherein the axis of rotation of the flap valve is arranged transversely to the longitudinal direction of the catalytic converter container (8, 8.1 8.2) if the respective outlet (8a) in whose region the flap valve is located is formed at an end face of the catalytic converter container.

7. An apparatus in accordance with any one of the preceding claims, wherein a respective nozzle (13, 13.1, 13.1', 13.2, 13.2') for injecting reductant is provided in the inlet stubs (7a, 7a', 7.1a, 7.1a', 7.1a", 7.2a, 7.2a', 7.2a") of the exhaust manifold (7, 7.1, 7.2).

8. An apparatus in accordance with any one of the preceding claims, wherein one or more openings distributed over the periphery is/are respectively provided in the inlet stubs (7a, 7a', 7.1a, 7.1a', 7.1a", 7.2a, 7.2a', 7.2a") of the exhaust manifold (7, 7.1, 7.2) to supply the reductant and to admix it to the exhaust gas.

9. An apparatus in accordance with any one of the claims 1 to 8, including at least one mixing pipe (14, 14', 14.1, 14.2) which extends in each case from the exhaust manifold (7, 7.1, 7.2) through a port (9a, 9.1a, 9.1a', 9.2a) into the catalytic converter container (8, 8.1, 8.2) and in which one or more nozzles (13) for injecting reductant is/are respectively provided.

10. An apparatus in accordance with any one of the claims 7 to 9 additionally including an external reactor or evaporator (16) for producing gaseous ammonia, wherein the reactor or evaporator (16) is connected to the nozzles (13, 13.1, 13.1', 13.2, 13.2') for injecting reductant or to the feed (13, 13.1, 13.1', 13.2, 13.2') or to the one or more openings distributed over the periphery in the respective inlet stub (7a, 7a', 7.1a, 7.1a', 7.1a", 7.2a, 7.2a', 7.2a") to admix gaseous ammonia to the exhaust gas as a reductant.

11. A large diesel engine (1), in particular a large two-stroke diesel engine, comprising an apparatus (10) in accordance with any one of the claims 1 to 10.

12. A large diesel engine (1), in particular a large two-stroke diesel engine, in accordance with claim 10 additionally comprising one or more exhaust gas turbochargers (12), wherein the apparatus (10) is arranged between the outlet valves (6) of the large diesel engine (1) and the exhaust gas turbocharger or turbochargers (12).

13. A method for exhaust gas aftertreatment for a large diesel engine (1) in accordance with claim 11 or claim 12, in particular for a large two-stroke diesel engine, wherein a reductant is supplied to the exhaust gases in the inlet stubs (7a, 7a', 7.1a, 7.1a', 7.1a", 7.2a, 7.2a', 7.2a") of the exhaust manifold (7, 7.1, 7.2) and the respective inlet stub at which a diffuser (15a) is formed at the outlet side is used as an ejector pump (15) for the reductant.

14. A method in accordance with claim 13, wherein the reductants are admixed to the exhaust gases when the outlet valves (4) are open or the reductant is continuously introduced into the exhaust gas manifold.

15. A method in accordance with one of the claims 13 or 14, wherein reductants are continuously admixed to the exhaust gases in a mixing pipe (14, 14', 14.1, 14.2).

## Revendications

1. Dispositif (10) pour le post-traitement des gaz d'échappement pour un gros moteur diesel (1), plus particulièrement d'un gros moteur diesel à deux temps, le dispositif (10) comprenant un collecteur de gaz d'échappement oblong (7, 7.1, 7.2) avec plusieurs entrées (7a, 7a', 7.1a, 7.1a', 7.1a", 7.2a, 7.2a', 7.2a") réparties sur sa direction longitudinale, pour la prise en charge des gaz d'échappement du gros moteur diesel, et un réservoir de catalyseur (8, 8.1, 8.2) relié au collecteur de gaz d'échappement, dans lequel sont disposés plusieurs éléments catalyseurs (8, 8') et qui comprend une ou plusieurs sorties (8a), le collecteur de gaz d'échappement (7, 7.1, 7.2) et le réservoir de catalyseur (8, 8.1, 8.2) étant disposés l'un à côté de l'autre de manière globalement parallèle, et étant séparés l'un de l'autre par au moins une cloison (9) qui s'étend dans la direction longitudinale, de façon à ce que le collecteur de gaz d'échappement (7, 7.1, 7.2) soit relié, par l'intermédiaire d'un ou plusieurs passages (9a, 9.1a, 9.1a', 9.2a), qui sont prévus dans la ou les cloisons (9), avec le réservoir de catalyseur (8, 8.1, 8.2), afin de conduire les gaz d'échappement, lors du fonctionnement, à travers les éléments catalyseurs (8, 8') vers la sortie (8a) correspondante, **caractérisé en ce que**, dans les raccords d'entrée (7a, 7a', 7.1a, 7.1a', 7.1a", 7.2a, 7.2a', 7.2a") du collecteur de gaz d'échappement (7, 7.1, 7.2), se trouve une alimentation (13, 13.1, 13.1', 13.2, 13.2') pour un produit de réduction et, au niveau du raccord d'entrée (7a, 7a', 7.1a, 7.1a', 7.1a", 7.2a, 7.2a', 7.2a"), du côté de la sortie, est prévu un diffuseur (15a), de façon à ce que le raccord d'entrée correspondante agisse, lors du fonctionnement, comme une pompe à jet (15) pour le produit de réduction.

2. Dispositif selon la revendication 1, le collecteur de gaz d'échappement (7, 7.1, 7.2) et le réservoir de catalyseur (8, 8.1, 8.2) présentant une forme tubulaire et/ou une forme globalement cylindrique.

3. Dispositif selon l'une des revendications 1 ou 2, le collecteur de gaz d'échappement (7, 7.1, 7.2) et le réservoir de catalyseur (8, 8.1, 8.2) comprennent chacun une partie aplatie s'étendant dans la direction longitudinale et le collecteur de gaz d'échappement (7, 7.1, 7.2) et le réservoir de catalyseur (8, 8.1, 8.2) se rejoignant au niveau de leur partie aplatie, et une cloison (9) se trouvant dans cette zone.

4. Dispositif selon l'une des revendications précédentes, les éléments catalyseurs (8, 8') pouvant être traversés dans la direction longitudinale du réservoir de catalyseur (8, 8.1, 8.2).

5. Dispositif selon l'une des revendications précédentes, une soupape (11, 11.1, 11.2) étant prévue au niveau de la ou des sorties (8a), afin de relier le collecteur d'échappement (7, 7.1, 7.2) directement avec la sortie (8a) correspondante.

6. Dispositif selon la revendication 5, la soupape (11, 11.1, 11.2) étant conçue comme une soupape à clapet et l'axe de rotation de la soupape à clapet étant disposé dans la direction longitudinale du réservoir de catalyseur (8, 8.1, 8.2), dans le cas où la sortie (8a) correspondante, au niveau de laquelle se trouve la soupape à clapet, est prévue au niveau d'un côté longitudinal du réservoir de catalyseur, et/ou l'axe de rotation de la soupape à clapet est disposé transversalement par rapport à la direction longitudinale du réservoir de catalyseur (8, 8.1, 8.2), dans le cas où la sortie (8a) correspondante, au niveau de laquelle se trouve la soupape à clapet, est prévue au niveau d'une face frontale du réservoir de catalyseur.

7. Dispositif selon l'une des revendications précédentes, une buse (13, 13.1, 13.1', 13.2, 13.2') pour l'injection d'un produit de réduction étant prévue dans chacun des raccords d'entrée (7a, 7a', 7.1a, 7.1a', 7.1a", 7.2a, 7.2a', 7.2a") du collecteur d'échappement (7, 7.1, 7.2).

8. Dispositif selon l'une des revendications précédentes, une ou plusieurs ouvertures répartie sur la circonférence étant prévues chacun des raccords d'entrée (7a, 7a', 7.1a, 7.1a', 7.1a", 7.2a, 7.2a', 7.2a") du collecteur d'échappement (7, 7.1, 7.2), afin d'alimenter le produit de réduction et de le mélanger au gaz d'échappement.

9. Dispositif selon l'une des revendications 1 à 16, comprenant au moins un tube de mélange (14, 14', 14.1, 14.2), qui s'étend du collecteur de gaz d'échappement (7, 7.1, 7.2), en passant par un passage (9a, 9.1a, 9.1a', 9.2a), vers le réservoir de catalyseur (8, 8.1, 8.2) et dans lequel sont prévues une ou plusieurs buses (13) pour l'injection de produit de réduction.

10. Dispositif selon l'une des revendications 7 à 9, comprenant en outre un réacteur ou un évaporateur externe (16) pour la production d'ammoniac gazeux, le réacteur ou l'évaporateur (16) étant relié avec les buses (13, 13.1, 13.1', 13.2, 13.2') pour l'injection de produit de réduction ou avec l'alimentation (13, 13.1, 13.1', 13.2, 13.2') ou avec la ou les ouvertures réparties sur la circonférence dans le raccord d'entrée (7a, 7a', 7.1a, 7.1a', 7.1a", 7.2a, 7.2a', 7.2a"), afin de mélanger au gaz d'échappement de l'ammoniac gazeux en tant que produit de réduction.

11. Gros moteur diesel (1), plus particulièrement gros moteur diesel à deux temps comprenant un dispositif (10) selon l'une des revendications 1 à 10.

12. Gros moteur diesel (1), plus particulièrement gros moteur diesel selon la revendication 10, comprenant en outre un ou plusieurs turbocompresseurs à gaz d'échappement (12), le dispositif (10) étant disposé entre les soupapes de sortie (6) du gros moteur diesel (1) et le ou les turbocompresseurs de gaz d'échappement (12).

13. Procédé de post-traitement de gaz d'échappement pour un gros moteur diesel (1), selon la revendication 11 ou 12, plus particulièrement un gros moteur diesel à deux temps, un produit de réduction étant ajouté aux gaz d'échappement (7a, 7a', 7.1a, 7.1a", 7.2a, 7.2a', 7.2a") du collecteur de gaz d'échappement (7, 7.1, 7.2) et le raccord d'entrée correspondant, au niveau duquel un diffuseur (15a) est prévu côté sortie, est utilisé lors du fonctionnement comme une pompe à jet (15) pour le produit de réduction.

14. Procédé selon la revendication 13, le produit de réduction étant ajouté aux gaz d'échappement lorsque les soupapes de sortie (4) sont ouvertes ou le produit de réduction étant introduit de manière continue dans le collecteur de gaz d'échappement (7, 7.1, 7.2).

15. Procédé selon l'une des revendications 13 ou 14, un produit de réduction étant ajouté aux gaz d'échappement de manière continue dans un tube de mélange (14, 14', 14.1, 14.2).
